# EUROPÄISCHE PATENTSCHRIFT

(11) **EP 3 635 317 B1**
(45) Veröffentlichungstag und Bekanntmachung des Hinweises auf die Patenterteilung: **30.12.2020**
(21) Anmeldenummer: 18731376.2
(22) Anmeldetag: 05.06.2018
(51) Int. Cl.: F28D 20/02, F24F 5/00

(54) **LATENTWÄRMESPEICHERSYSTEM MIT EINEM LATENTWÄRMESPEICHER UND VERFAHREN ZUM BETREIBEN EINES LATENTWÄRMESPEICHERSYSTEMS**
LATENT HEAT ACCUMULATOR SYSTEM COMPRISING A LATENT HEAT ACCUMULATOR AND METHOD FOR OPERATING A LATENT HEAT ACCUMULATOR SYSTEM
SYSTÈME ACCUMULATEUR DE CHALEUR LATENTE À ACCUMULATEUR DE CHALEUR LATENTE ET PROCÉDÉ DE COMMANDE D'UN SYSTÈME ACCUMULATEUR DE CHALEUR LATENTE

(30) Priorität: 06.06.2017 DE 102017112409
(43) Veröffentlichungstag der Anmeldung: 15.04.2020
(73) Patentinhaber: Viessmann Werke GmbH & Co. KG, 35107 Allendorf (Eder) (DE)
(72) Erfinder: FUCHS, Sven, 70186 Stuttgart (DE); PFANNKUCH, Moritz, 70197 Stuttgart (DE); ORTLIEB, Tobias, 82319 Starnberg (DE)
(74) Vertreter: RPK Patentanwälte Reinhardt, Pohlmann und Kaufmann Partnerschaft mbB
(86) Internationale Anmeldenummer: PCT/EP2018/064691
(87) Internationale Veröffentlichungsnummer: WO 2018/224463

(56) Entgegenhaltungen:
- EP-A2- 2 614 330
- WO-A2-2008/014295
- US-A- 4 798 059

## Beschreibung

### Stand der Technik

Die Erfindung betrifft ein Latentwärmespeichersystem mit einem Latentwärmespeicher und ein Verfahren zum Betreiben eines Latentwärmespeichersystems.

EP 2614330 A1 offenbart ein Latentwärmespeichersystem gemäß dem Oberbegriff von Anspruch 1, das Dokument zeigt ein Eisspeichersystem bei dem ein Entzugswärmetauscher während der Heizperiode Wärme aus einem Eisspeicher entzieht, bis der Eisspeicher thermisch entladen ist. Bei thermischer Entladung ist ein vorbestimmtes Volumen um den Entzugswärmetauscher vollständig zu Eis erstarrt. Dies erfolgt in kontrollierter Weise. Das Wasser um die Wärmetauscherrohre des Entzugswärmetauschers erstarrt gezielt von innen nach außen. Um den Eisspeicher wieder zu laden, wird nach der Heizperiode Wärme über einen Regenerationswärmetauscher in den Eisspeicher eingebracht. Dabei taut das Eis um den Entzugswärmetauscher ebenso gezielt und gerichtet wieder auf. Die hydraulischen Kreisläufe zum Entzug und zur Regeneration müssen streng getrennt sein, um ein unkontrolliertes Auftauen oder Einfrieren zu vermeiden, was den Eisspeicher unkontrollierbar macht oder im ungünstigsten Fall durch Abplatzungen von Eis die Wärmetauscherrohre beschädigen oder sogar zerstören kann.

### Offenbarung der Erfindung

Die Aufgabe der Erfindung ist es, ein Latentwärmespeichersystem zu schaffen, das eine gesteigerte Effizienz aufweist.

Eine weitere Aufgabe der Erfindung ist es, ein günstiges Verfahren zum Betreiben eines solchen Latentwärmespeichersystems zu schaffen.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die Erfindung geht aus von einem Latentwärmespeichersystem, das wenigstens einen Latentwärmespeicher, der ein Speichermedium mit latenter Wärme enthält, wenigstens einen Entzugskreislauf, mit dem im Normalbetrieb bestimmungsgemäß Wärme aus dem Speichermedium entziehbar ist und wenigstens einen Regenerationskreislauf, mit dem im Normalbetrieb bestimmungsgemäß Wärme in das Speichermedium zuführbar ist, umfasst. Der wenigstens eine Latentwärmespeicher umfasst wenigstens einen in Kontakt mit dem Speichermedium stehenden Entzugswärmetauscher, der mit dem Entzugskreislauf verbindbar ist, und wenigstens eine Regenerationsanordnung innerhalb des Speichermediums, der mit dem Regenerationskreislauf verbindbar ist.

Es wird vorgeschlagen, dass eine Kopplungsvorrichtung vorgesehen ist, mit der wenigstens zeitweise der wenigstens eine Entzugswärmetauscher mit der wenigstens einen Regenerationsanordnung zum gemeinsamen Wärmeentzug aus dem Speichermedium oder zur gemeinsamen Wärmezufuhr in das Speichermedium koppelbar ist.

Unter "bestimmungsgemäß Wärme aus dem Speichermedium entziehbar" soll verstanden werden, dass der Entzugswärmetauscher im Normalbetrieb Wärme aus dem Speichermedium entzieht und dieses dabei abkühlt. Vorzugsweise kann bis zum thermischen Entladen eines Bereichs um den Entzugswärmetauscher Wärme entnommen werden. Dies ist im Normalbetrieb beispielsweise im Winter der Fall. Von Beginn der kalten Jahreszeit bis zum Ende der kalten Jahreszeit erstarrt das Volumen um den Entzugswärmetauscher sukzessive. Bei Wasser als Speichermedium bildet sich in kontrollierter Weise ein monolithischer Eisblock, in dem der Entzugswärmetauscher eingebettet ist. Der Wärmeübertrag vom Speichermedium in das Wärmeträgermedium im Entzugswärmetauscher erfolgt über den monolithischen Eisblock. Der Entzugswärmetauscher ist im Entzugskreislauf vorzugsweise an eine Wärmepumpe angeschlossen, welche die entzogene Wärme auf ein höheres Temperaturniveau anhebt, das von einem Verbraucher genutzt werden kann. Ein typisches Wärmeträgermedium im Entzugskreislauf kann beispielsweise Sole oder ein Glykol-Wassergemisch sein.

Unter "bestimmungsgemäß Wärme in das Speichermedium zuführbar" soll verstanden werden, dass die Regenerationsanordnung im Normalbetrieb Wärme in das Speichermedium abgibt und dieses dabei erwärmt. Durch die Wärmezufuhr kann der thermisch entladene Latentwärmespeicher aufgeladen werden und/oder ein thermisches Entladen verzögert werden. Vorzugsweise wird der erstarrte Bereich um den Entzugswärmetauscher wieder aufgetaut. Dies ist im Normalbetrieb beispielsweise im Sommer der Fall. Bevorzugt vom Beginn der warmen Jahreszeit an bis zum Ende der warmen Jahreszeit verflüssigt sich durch die Wärmezufuhr das erstarrte Volumen um den Entzugswärmetauscher sukzessive in kontrollierter Weise, wobei der darin eingebettete Entzugswärmetauscher wieder freigelegt wird. Bei Wasser als Speichermedium wird in kontrollierter Weise der monolithische Eisblock aufgetaut. Der Wärmeübertrag vom erwärmten Speichermedium in das Wärmeträgermedium im Entzugswärmetauscher erfolgt über den schmelzenden monolithischen Eisblock. Wird weiter Wärme über die Regenerationsanordnung zugeführt, steigt die Temperatur des Speichermediums entsprechend an.

Die Regenerationsanordnung ist im Entzugskreislauf günstigerweise mit einer oder mehreren Wärmequellen verbunden. Vorzugsweise ist eine Wärmequelle eine Luftabsorbereinrichtung, die Wärme aus der Umgebungsluft aufnimmt. Optional können Wärmequellen wie Abwärme von Kältemaschinen, Abluft von Kühlanlagen und dergleichen, alternativ oder zusätzlich wenigstens zeitweise angeschlossen sein. Ein typisches Wärmeträgermedium im Regenerationskreislauf kann beispielsweise Sole oder ein Glykol-Wassergemisch sein. Dies ist vorzugsweise der Fall, wenn die Regenerationsanordnung ein Wärmetauscher ist. Alternativ kann eine "offene" Regenerationsanordnung vorgesehen sein, bei der wenigstens in einem Abschnitt des Regenerationskreislaufs das Speichermedium selbst als Wärmeträgermedium genutzt wird und die Regenerationsanordnung einen oder mehrere Auslässe für das Wärmeträgermedium in das Speichermedium und einen oder mehrere Einlässe für das Speichermedium in den Regenerationskreislauf aufweist. Im Regenerationskreislauf kann zweckmäßigerweise ein Wärmetauscher angeordnet sein, der Wärme von einer oder mehreren Wärmequellen auf das im Abschnitt des Regenerationskreislaufs zirkulierende Wärmeträgermedium, das durch das Speichermedium gebildet wird, überträgt.

Solange erstarrtes Speichermedium im Latentwärmespeicher vorhanden ist, oder das Speichermedium noch kalt genug ist, kann über den Regenerationskreislauf gekühlt werden. Beispielsweise kann im Sommer ein Wohnhaus gekühlt werden. Das kalte Wärmeträgermedium im Regenerationskreislauf kann über einen Wärmetauscher beispielsweise einen Wohnbereich kühlen.

Der wenigstens eine Entzugswärmetauscher und die wenigstens eine Regenerationsanordnung sind aufeinander abgestimmt, so dass ein saisonales Auftauen und Erstarren des Speichermediums in beherrschbarer Weise erfolgen kann. Der Entzugskreislauf und der Regenerationskreislauf sind dabei zwangsläufig hydraulisch getrennt.

Vorteilhaft kann erfindungsgemäß trotzdem in bestimmten Betriebsphasen mit Zusammenschaltung, insbesondere einer Serienschaltung oder einer Parallelschaltung, von Entzugswärmetauscher und Regenerationsanordnung ein gemeinsamer Wärmeentzug oder eine gemeinsame Wärmezufuhr mittels Entzugswärmetauscher und Regenerationsanordnung erfolgen. Vorzugsweise ist die Wärmepumpe des Entzugskreislaufs in diesen Betriebsphasen nicht in Betrieb. Insbesondere ist in den Betriebsphasen kein oder nur sehr wenig erstarrtes Speichermedium im Latentwärmespeicher vorhanden. Dabei kann bei gekoppelter Anordnung dasselbe Wärmeträgermedium des wenigstens einen Entzugswärmetauschers und der wenigstens einen Regenerationsanordnung die Komponenten durchfließen, oder es kann ein indirekte Kopplung vorgesehen sein, bei dem die Wärme des einen Wärmeträgermediums beispielsweise über einen Wärmetauscher auf das andere Wärmeträgermedium übertragen wird. Der Wärmetauscher dient als Systemtrennung zwischen den verschiedenen Wärmeträgermedien, vorzugsweise wenn eine "offene" Regenerationsanordnung vorgesehen ist.

Mit der erfindungsgemäßen Kopplung kann in den Betriebsphasen vorteilhaft erreicht werden, dass phasenweise dem Latentwärmespeicher mehr Wärme zur Verfügung gestellt und dieser schneller regeneriert werden kann oder bei Bedarf einer verstärkten Kühlung der erhöhte Kühlbedarf erfüllt werden kann. So kann beispielsweise im Hochsommer günstig und effizient aus dem Latentwärmespeicher gekühlt werden. Bei Bedarf kann das Speichermedium durch Wärmezufuhr in Regenerationsanordnung und Entzugswärmetauscher gezielt schneller regeneriert werden. Je nach Anforderung von Kühlung oder Regeneration kann die Kopplung entsprechend erfolgen.

Nach einer günstigen Ausgestaltung kann die Kopplungsvorrichtung zum vorübergehenden gemeinsamen Wärmeentzug aus dem Speichermedium die wenigstens eine Regenerationsanordnung des Regenerationskreislaufs und den wenigstens einen Entzugswärmetauscher gemeinsam an eine Wärmequelle anschließen, oder die Kopplungsvorrichtung kann zur vorübergehenden gemeinsamen Wärmezufuhr in das Speichermedium den wenigstens einen Entzugswärmetauscher und die wenigstens eine Regenerationsanordnung des wenigstens einen Regenerationskreislaufs gemeinsam an eine Wärmesenke anschließen. Die Wärmequelle kann eine Luftabsorbereinrichtung sein, die Wärme aus der Umgebungsluft aufnimmt. Optional können Wärmequellen wie Abwärme von Kältemaschinen, Abluft von Kühlanlagen und dergleichen alternativ oder zusätzlich wenigstens zeitweise als Wärmequelle angeschlossen sein. Die Wärmesenke kann beispielsweise der Eisspeicher sein. Das Speichermedium kann schneller aufwärmen.

Nach einer günstigen Ausgestaltung kann der wenigstens eine Regenerationskreislauf als Regenerationsanordnung einen Regenerationswärmetauscher aufweisen. Insbesondere können die Wärmeträgermedien von Entzugswärmetauscher und Regenerationswärmetauscher zum gemeinsamen Wärmeentzug aus dem Speichermedium oder zur gemeinsamen Wärmezufuhr in das Speichermedium in eine gemeinsame Zuleitung zur Wärmequelle oder zur Wärmesenke leitbar sein. Günstigerweise kann bei einer Serienschaltung von Entzugswärmetauscher und Regenerationswärmetauscher das Wärmeträgermedium seriell durch beide Wärmetauscher fließen. Bei einer vorteilhaften Parallelschaltung von Regenerationsanordnung und Entzugswärmetauscher können die Wärmeträgermedien stromab der Wärmetauscher miteinander gemischt werden.

Alternativ kann die Regenerationsanordnung des wenigstens einen Regenerationskreislaufs das Speichermedium als Wärmeträgermedium aufweisen und zum gemeinsamen Wärmeentzug aus dem Speichermedium oder zur gemeinsamen Wärmezufuhr in das Speichermedium über einen Wärmetauscher im Regenerationskreislauf mit dem Wärmeträgermedium des wenigstens einen Entzugswärmetauschers koppelbar sein. Die Regenerationsanordnung ist in diesem Fall offen zum Speichermedium und kann insbesondere einen oder mehrere Auslässe und einen oder mehrere Einlässe für das Wärmeträgermedium in Form des Speichermediums aufweisen.

Der Wärmetauscher im Regenerationskreislauf dient vorteilhaft als Trennung zwischen unterschiedlichen Wärmeträgermedien im Regenerationskreislauf. Eine Verunreinigung des Speichermediums bei zeitweiser Kopplung von Regenerationsanordnung und Entzugswärmetauscher kann vermieden werden.

Nach einer günstigen Ausgestaltung kann die Kopplungsvorrichtung ein regel- und/oder steuerbares Mischelement umfassen. Dies ist besonders für eine Parallelschaltung des wenigstens einen Entzugswärmetauschers und der wenigstens einen Regenerationsanordnung günstig. Je nach Bedarf kann die Menge der Wärmeträgermedien, die zusammengemischt werden, eingestellt werden. So kann ein Volumenstrom aus dem Entzugswärmetauscher oder aus der Regenerationsanordnung bedarfsabhängig bei einer Mischung der Wärmeträgermedien stetig eingestellt werden, bis eine geforderte Soltemperatur und/oder Sollleistung bei der Wärmezufuhr zur Regeneration oder dem Wärmeentzug zur Kühlung erreicht ist.

Nach einer günstigen Ausgestaltung kann eine Regel- und/oder Steuervorrichtung vorgesehen sein, welche die Kopplungsvorrichtung abhängig von wenigstens einem Betriebsparameter des Latentwärmespeichers und/oder des Latentwärmespeichersystems betätigt. Vorteilhaft kann ein Volumenstrom der zu mischenden Wärmeträgermedien eingestellt werden. Beispielswiese kann bei maximaler Anforderung von Regeneration oder Kühlung die Regel- und/oder Steuervorrichtung einen maximalen Durchfluss an der Kopplungsvorrichtung einstellen, während bei geringeren Anforderungen die Kopplungsvorrichtung, beispielsweise ein Mischelement, einen geringeren Volumenstrom beispielsweise des Wärmeträgermediums aus dem Entzugswärmetauscher zumischt.

Nach einem weiteren Aspekt der Erfindung wird ein Verfahren zum Betreiben eines Latentwärmespeichersystems vorgeschlagen wobei das Latentwärmespeichersystem wenigstens einen Latentwärmespeicher, der ein Speichermedium mit latenter Wärme enthält, wenigstens einen Entzugskreislauf, mit dem im Normalbetrieb bestimmungsgemäß Wärme aus dem Speichermedium entzogen wird und wenigstens einen Regenerationskreislauf, mit dem im Normalbetrieb bestimmungsgemäß Wärme in das Speichermedium zugeführt wird, umfasst. Der wenigstens eine Latentwärmespeicher umfasst wenigstens einen in Kontakt mit dem Speichermedium stehenden Entzugswärmetauscher, der mit dem Entzugskreislauf verbunden ist und wenigstens einen Regenerationsbereich innerhalb des Speichermediums, der mit dem Regenerationskreislauf verbunden ist. Wenigstens zeitweise wird der wenigstens eine Entzugswärmetauschers mit der wenigstens einen Regenerationsanordnung zum gemeinsamen Wärmeentzug aus dem Speichermedium oder zur gemeinsamen Wärmezufuhr in das Speichermedium gekoppelt.

Abweichend vom oben erläuterten Normalbetrieb ist eine mit dem Entzugswärmetauscher verbundene Wärmepumpe bei der Kopplung nicht in Betrieb.

Mit der erfindungsgemäßen Kopplung, bei der der wenigstens eine Entzugswärmetauscher und die wenigstens eine Regenerationsanordnung seriell oder parallel verschaltet werden können, kann vorteilhaft erreicht werden, dass phasenweise dem Latentwärmespeicher mehr Wärme zur Verfügung gestellt werden und dieser schneller regeneriert und/oder das Speichermedium schneller erwärmt werden kann oder bei Kühlungsbedarf mehr Wärme abgeführt werden kann. So kann beispielsweise im Hochsommer günstig und effizient aus dem Latentwärmespeicher gekühlt werden. Bei Bedarf kann das Speichermedium durch Wärmezufuhr in Regenerationsanordnung und Entzugswärmetauscher gezielt schneller regeneriert werden. Je nach Anforderung von Kühlung oder Regeneration kann die Kopplung entsprechend erfolgen.

Nach einem günstigen Verfahrensschritt kann der wenigstens eine Entzugswärmetauscher mit der wenigstens einen Regenerationsanordnung nur bis zu einem vorgegebenen Vereisungsgrad des Entzugswärmetauschers bezogen auf ein bestimmungsgemäß vereisbares Volumen des Entzugswärmetauschers gekoppelt werden, vorzugsweise bis zu einem Vereisungsgrad von höchstens 10% bezogen auf ein bestimmungsgemäß vereisbares Volumen des Latentwärmespeichers.

Der Begriff "vereisbares Volumen" soll so verstanden werden, dass es sich um das Volumen handelt, in dem erstarrtes Speichermedium vorhanden ist, das Wassereis sein kann. Grundsätzlich kann jedoch auch ein anderes Speichermedium mit latenter Wärme vorgesehen sein.

Vorteilhaft ist vorgesehen, dass das maximal vereisbare Volumen kleiner ist als das Fassungsvermögen des Latentwärmespeichers. Bevorzugt ist das vereisbare Volumen auch bei maximalem Vereisungsgrad von flüssigem Speichermedium umgeben. Die Größe des maximal vereisbaren Volumens kann primär durch die Auslegung des Entzugswärmetauschers vorgegeben werden. Der Latentwärmespeicher kann so ausgelegt werden, dass unter Normalbedingungen das vereisbare Volumen stets von flüssigem Speichermedium umgeben sein kann.

Nach einem günstigen Verfahrensschritt kann in einem ersten Betriebsmodus zur gemeinsamen Wärmezufuhr in das Speichermedium der wenigstens eine Entzugswärmetauscher und die Regenerationsanordnung des wenigstens einen Regenerationskreislaufs zusammengeschaltet und mit einer Wärmequelle verbunden werden. Vorteilhaft kann eine Regeneration des Speichermediums im Latentwärmespeicher verbessert werden. Insbesondere kann der erste Betriebsmodus eingestellt werden, wenn die Temperatur des Speichermediums kleiner ist als 10°C, bevorzugt kleiner als 7°C ist, besonders bevorzugt höchstens 5°C beträgt.

Nach einem günstigen Verfahrensschritt kann in einem zweiten Betriebsmodus zum gemeinsamen Wärmeentzug aus dem Speichermedium die Regenerationsanordnung des wenigstens einen Regenerationskreislaufs und der wenigstens eine Entzugswärmetauscher zusammengeschaltet und mit einer Wärmesenke verbunden werden. Insbesondere kann der zweite Betriebsmodus eingestellt werden, wenn die Temperatur des Speichermediums größer ist als 5°C, bevorzugt größer als 7°C, besonders bevorzugt mehr als 10°C beträgt.

Nach einem günstigen Verfahrensschritt kann in einem Teillastbetrieb eine Kopplungsstärke zwischen Entzugswärmetauscher und Regenerationsanordnung abhängig von einer Solltemperatur der Wärmeträgermedien und/oder Sollleistung von Wärmequelle oder Wärmesenke verändert werden. Das Latentwärmespeichersystem kann günstigerweise kurzfristig und effizient Wärme und Kälte bereitstellen.

Nach einem günstigen Verfahrensschritt kann in einem Volllastbetrieb der Entzugswärmetauscher und die Regenerationsanordnung maximal durchströmt werden. Vorteilhaft kann eine Kopplungsvorrichtung, beispielsweise ein Mischelement, in einem solchen Betriebsmodus mit kurzer Ansprechzeit maximal geöffnet werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein bekanntes Latentwärmespeichersystem im Normalbetrieb mit getrennten hydraulischen Kreisläufen zum Entzug und zur Regeneration;
- Fig. 2: das Latentwärmespeichersystem aus Fig. 1 in einer Betriebsphase mit einer Kopplung von Entzugswärmetauscher und einer Regenerationsanordnung in Form eines Regenerationswärmetauschers nach einem Ausführungsbeispiel der Erfindung;
- Fig. 3: das Latentwärmespeichersystem aus Fig. 1 in einer Betriebsphase mit einer Kopplung von Entzugswärmetauscher und offener Regenerationsanordnung nach einem weiteren Ausführungsbeispiel der Erfindung;
- Fig. 4: ein Ablaufschema zur Betriebsweise eines Latentwärmespeichersystems nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

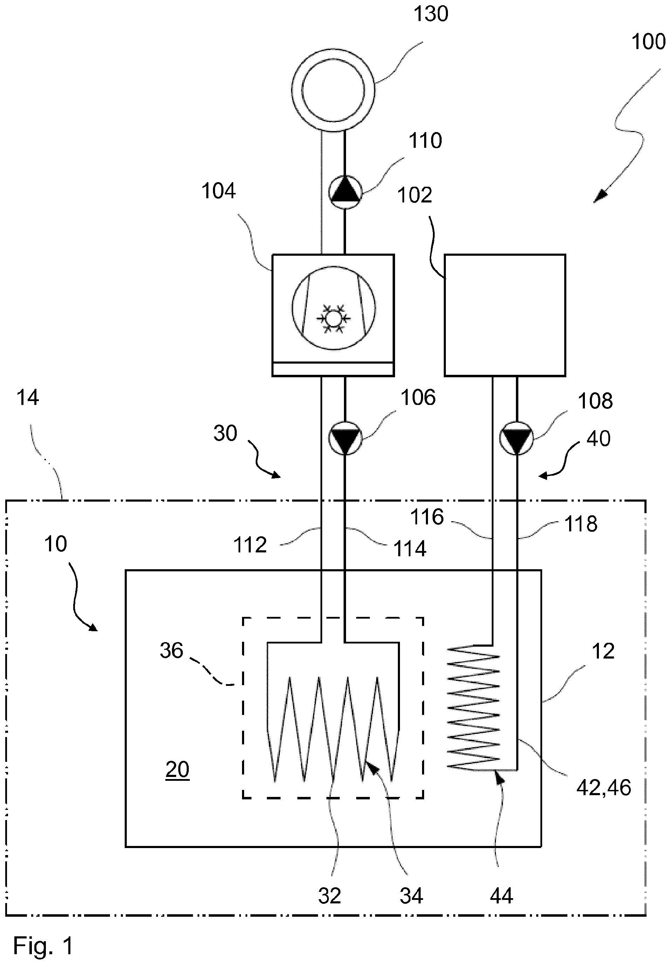

Figur 1 stellt ein Latentwärmespeichersystem 100 im Normalbetrieb dar. Das Latentwärmespeichersystem 100 umfasst einen Latentwärmespeicher 10, der ein Speichermedium 20 mit latenter Wärme enthält, beispielsweise Wasser. Ferner umfasst das Latentwärmespeichersystem 100 einen Entzugskreislauf 30, der im Normalbetrieb bestimmungsgemäß Wärme aus dem Speichermedium 20 entzieht und einen Regenerationskreislauf 40, mit dem im Normalbetrieb bestimmungsgemäß Wärme in das Speichermedium 20 zugeführt wird.

Der Latentwärmespeicher 10 umfasst einen in Kontakt mit dem Speichermedium 20 stehenden, insbesondere darin eingetauchten, Entzugswärmetauscher 32, der mit dem Entzugskreislauf 30 verbunden ist und eine Regenerationsanordnung 42 innerhalb des Speichermediums 20, die mit dem Regenerationskreislauf 40 verbunden ist. Der Latentwärmespeicher 10 weist eine Umwandung 12 auf, beispielsweise ein Gehäuse, die vorzugsweise im Erdreich vorgesehen oder angeordnet ist und die mit dem Speichermedium 20 gefüllt ist. Optional kann das Speichermedium 20 auch direkt im Erdreich vorgesehen sein, beispielsweise als Teichanlage oder Kaverne. Der Bereich 14 des Erdreichs, der thermisch auf den Latentwärmespeicher 10 durch Wärmezufuhr oder Wärmeaufnahme einwirkt, ist mit einer Strich-Doppelpunktierten Linie angedeutet. Der Latentwärmespeicher 10 kann dabei selbst als Erdsonde wirken.

Im Entzugskreislauf 30 ist der Entzugswärmetauscher 32 über Leitungen 112, 114 mit einer Wärmepumpe 104 verbunden. Die Wärmepumpe 104 hebt das Temperaturniveau des Wärmeträgermediums 34 an und versorgt einen Verbraucher 130 mit Wärme auf entsprechend höherem Niveau.

Das Wärmeträgermedium 34 wird mit einer Förderpumpe 106 im Entzugskreislauf 30 umgewälzt. Die Wärmepumpe 104 versorgt mit einem nicht näher bezeichneten Kreislauf einen Verbraucher 130, beispielsweise ein Gebäude, ein Wohnhaus oder dergleichen, mit Wärme und fördert ein entsprechendes Wärmeträgermedium mit einem Fördermittel 110.

Im Regenerationskreislauf 40 ist die Regenerationsanordnung 42 über Leitungen 116, 118 mit einer Wärmequelle 102 verbunden. Beispielhaft ist die Regenerationsanordnung 42 in Form eines Regenerationswärmetauschers 46 vorgesehen, der im Speichermedium 20 angeordnet ist, und der beispielsweise mit einem Luftabsorber als Wärmequelle 102 verbunden ist und der Wärme der Umgebungsluft aufnimmt. Das Wärmeträgermedium 44 im Regenerationskreislauf 40 wird mit einer Pumpe 108 umgewälzt.

Der Entzugswärmetauscher 32 entzieht im Normalbetrieb Wärme aus dem Speichermedium 20 und kühlt dieses dabei ab. Vorzugsweise kann bis zum thermischen Entladen eines vorgegebenen Bereichs 36 um den Entzugswärmetauscher 32 Wärme entnommen werden. Dies ist im Normalbetrieb beispielsweise im Winter der Fall. Von Beginn der kalten Jahreszeit bis zum Ende der kalten Jahreszeit erstarrt das Volumen 36 um den Entzugswärmetauscher 32 sukzessive. Bei Wasser als Speichermedium 20 bildet sich in kontrollierter Weise ein monolithischer Eisblock, der im vollständig entladenen Zustand des Speichermediums 20 maximal das Volumen 36 einnimmt, in das der Entzugswärmetauscher 32 eingebettet ist. Das vorbestimmte Volumen 36 ergibt sich im Wesentlichen aus der Auslegung des Entzugswärmetauschers 32.

Der Wärmeübertrag vom Speichermedium 20 in das Wärmeträgermedium 34 im Entzugswärmetauscher 32 erfolgt über den monolithischen Eisblock. Der Entzugswärmetauscher 32 ist im Entzugskreislauf 20 an die Wärmepumpe 104 angeschlossen, welche die entzogene Wärme auf ein höheres Temperaturniveau anhebt, das von dem Verbraucher 130 genutzt werden kann. Ein typisches Wärmeträgermedium 20 im Entzugskreislauf 30 kann beispielsweise Sole oder ein Glykol-Wassergemisch sein.

Die Regenerationsanordnung 42 gibt im Normalbetrieb Wärme in das Speichermedium 20 ab und erwärmt dieses dabei. Durch die Wärmezufuhr kann der thermisch entladene Latentwärmespeicher 10 thermisch aufgeladen werden. Vorzugsweise wird bei entladenem oder teilweise entladenem Speichermedium 20 das erstarrte Speichermedium 20 um den Entzugswärmetauscher 32 wieder aufgetaut. Dies ist im Normalbetrieb beispielsweise im Sommer der Fall. Bevorzugt vom Beginn der warmen Jahreszeit an bis zum Ende der warmen Jahreszeit verflüssigt sich durch die Wärmezufuhr das erstarrte Speichermedium 20 um den Entzugswärmetauscher 32 sukzessive in kontrollierter Weise, wobei der darin eingebettete Entzugswärmetauscher 32 wieder freigelegt wird. Bei Wasser als Speichermedium 20 wird in kontrollierter Weise der monolithische Eisblock aufgetaut. Der Wärmeübertrag vom erwärmten Speichermedium 20 in das Wärmeträgermedium 34 im Entzugswärmetauscher 32 erfolgt über den schmelzenden monolithischen Eisblock. Wird bei vollständig aufgeschmolzenem Speichermedium 20 weiter Wärme über die Regenerationsanordnung 40 zugeführt, steigt die Temperatur des Speichermediums 20 entsprechend an.

Entzugskreislauf 30 und Regenerationskreislauf 40 sind wegen ihrer verschiedenen Funktionen im Normalbetrieb hydraulisch streng getrennt.

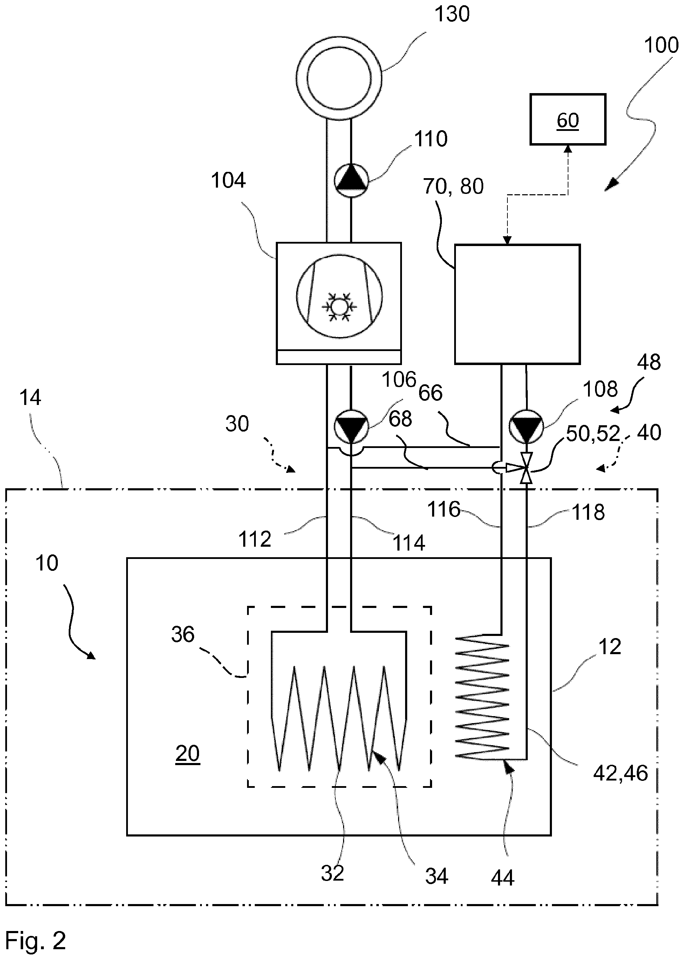

Figur 2 zeigt das Latentwärmespeichersystem 10 aus Figur 1 nach einem Ausführungsbeispiel der Erfindung in einer Betriebsphase außerhalb des Normalbetriebs. In dieser Betriebsphase ist die Wärmepumpe 104 nicht in Betrieb, so dass der Entzugskreislauf 30 ruht.

Die Regenerationseinrichtung 42 ist als Regenerationswärmetauscher 46 ausgebildet, in dem ein Wärmeträgermedium 44 zirkuliert, das vorzugsweise dem Wärmeträgermedium 34 aus dem Entzugskreislauf 30 entspricht, beispielsweise Sole oder ein Wasser-Glykolgemisch.

Zwischen dem Entzugswärmetauscher 32 und dem Regenerationswärmetauscher 46 ist eine Kopplungsvorrichtung 50 vorgesehen, mit der zeitweise der Entzugswärmetauscher 32 mit dem einen Regenerationswärmetauscher 42 zum gemeinsamen Wärmeentzug aus dem Speichermedium 20 oder zur gemeinsamen Wärmezufuhr in das Speichermedium 20 gekoppelt ist. Im abgebildeten Ausführungsbeispiel sind die Regenerationsanordnung 42 und der Entzugswärmetauscher 32 strömungsmäßig parallel geschaltet. Optional kann alternativ eine Serienschaltung vorgesehen sein.

Im gemeinsamen Kreislauf 48 zirkuliert das Wärmeträgermedium 34 des Entzugswärmetauschers 32 und das Wärmeträgermedium 44 des Regenerationswärmetauschers 46 zum gemeinsamen Wärmeentzug aus dem Speichermedium 20 oder zur gemeinsamen Wärmezufuhr in das Speichermedium 20.

Die Kopplungsvorrichtung 50 ist hier als Mischelement 52 ausgebildet, so dass der Entzugswärmetauscher 32 des bisherigen Entzugskreislaufs 30 in definierter Weise mit einem vorgebbaren Volumenstrom seines Wärmeträgermediums 34 dem Volumenstrom des Wärmeträgermediums 44 des Regenerationskreislaufs 40 zugemischt werden kann. Hierzu steuert eine Regel- und/oder Steuereinrichtung 60 die Kopplungsvorrichtung 50 abhängig von wenigstens einem Betriebsparameter des Latentwärmespeichersystems 100 und/oder des Latentwärmespeichers 10 an.

Die Kopplungsvorrichtung 50 schließt zum vorübergehenden gemeinsamen Wärmeentzug aus dem Speichermedium 20 die Regenerationsanordnung 42 in Form des Regenerationswärmetauschers 46 und den Entzugswärmetauscher 32 gemeinsam an eine Komponente an, die eine Wärmequelle 70 oder eine Wärmesenke 80 sein kann. Verbindungsleitungen 66, 68 verbinden die Zu- und Ableitungen 112, 114 und 116, 118 des bisherigen Entzugskreislaufs 30 und des bisherigen Regenerationskreislaufs 40. Die Kopplungsvorrichtung 50 ist im bisherigen Regenerationskreislauf 40 angeordnet, und eine Leitung 114 des Entzugswärmetauschers 32 ist mit der Kopplungsvorrichtung 50, beispielsweise einem Mischelement 52, verbunden.

Die Wärmequelle 70 kann insbesondere die Wärmequelle 102, beispielsweise ein Luftabsorber, sein, der die Wärme von Umgebungsluft aufnimmt und über die Regenerationseinrichtung 46 in den Latentwärmespeicher 10 einleitet. Es können alternativ oder zusätzlich auch andere Wärmequellen einzeln oder in beliebigen Kombinationen vorgesehen sein.

Der Luftabsorber kann beispielsweise als Dachabsorber auf einem Gebäudedach eines Gebäudes montiert sein, wobei pauschal das Gebäude den Verbraucher 130 darstellen kann.

Die Wärmequelle 70 kann auch ein Wärmetauscher sein, mit dem ein Kühlbedarf abgedeckt werden kann. So kann im Sommer mit dem noch kalten Speichermedium 20 beispielsweise das Gebäude gekühlt werden.

Bei einem erhöhten Regenerationsbedarf des Latentwärmespeichers 10 dient die Kopplung zwischen Entzugswärmetauscher 32 und Regenerationsanordnung 42 dazu, dem Latentwärmespeicher 10 möglichst viel Wärme zuzuführen und dementsprechend schnell aufzuwärmen. Entsprechend stellt die Kopplungsvorrichtung 50 den Volumenstrom aus dem Entzugswärmetauscher 32 ein.

Bei einem Kühlbedarf des Gebäudes dient die Kopplung zwischen Entzugswärmetauscher 32 und Regenerationsanordnung 42 dazu, dem Gebäude ausreichend viel Kälte zuzuführen. Entsprechend des Kühlungsbedarfs des Gebäudes stellt die Kopplungsvorrichtung 50 den Volumenstrom aus dem Entzugswärmetauscher 32 ein.

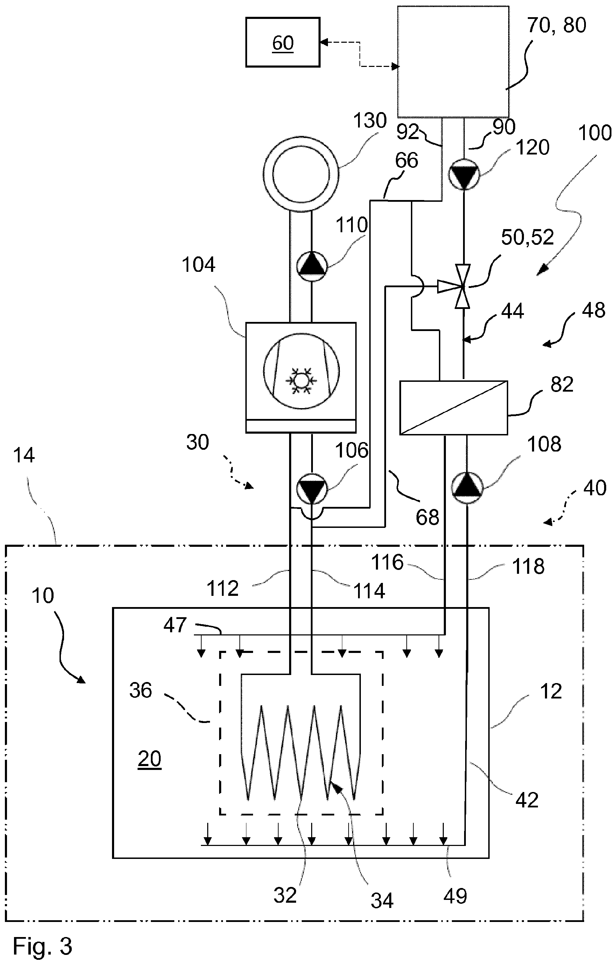

Figur 3 zeigt das Latentwärmespeichersystem 10 aus Figur 1 nach einem weiteren Ausführungsbeispiel der Erfindung in einer Betriebsphase außerhalb des Normalbetriebs. In dieser Betriebsphase ist die Wärmepumpe 104 nicht in Betrieb, so dass der Entzugskreislauf 30 ruht. In diesem Ausführungsbeispiel ist die Regenerationsanordnung 42 im Latentwärmespeicher 10 in Form einer "offenen" Regenerationsanordnung 42 vorgesehen, bei der das nicht näher bezeichnete Wärmeträgermedium der Regenerationsanordnung 42 das Speichermedium 20 ist.

Die Regenerationsanordnung 42 ist als "offenes" System ausgebildet und weist Zuflüsse 47 und Abflüsse 49 im Latentwärmespeicher 10 auf. Beispielsweise können die Zuflüsse 47 und Abflüsse 49 durch Ringleitungen gebildet sein, welche entlang ihres Umfangs Öffnungen zum Durchtritt des Speichermediums 20 aufweisen. Im Regenerationskreislauf 40 ist zwischen Wärmequelle 70 / Wärmesenke 80 und Regenerationsanordnung 42 ein Wärmetauscher 82 angeordnet, der den Regenerationskreislauf 40 in zwei Abschnitte trennt, wobei im Bereich der Regenerationsanordnung 42 das Speichermedium als Wärmeträgermedium zirkuliert und im Abschnitt des Regenerationskreislaufs 40 zwischen Wärmetauscher 82 und Wärmequelle 70 / Wärmesenke 80 ein zweites Wärmeträgermedium 44 zirkuliert. Vorzugsweise ist dieses dasselbe Medium wie das erste Wärmeträgermedium 34 des Entzugswärmetauschers 32. Das Wärmeträgermedium der Regenerationsanordnung 42 überträgt seine Wärme auf das zweite Wärmeträgermedium 44 des Regenerationskreislaufs 40 über den Wärmetauscher 82.

Der Wärmetauscher 82 trennt die Wärmeträgerkreisläufe des Abschnitts des Regenerationskreislaufs 40 mit der der offenen Regenerationsanordnung 42 und dem Wärmeträgerkreislauf 48. Der Wärmeträgerkreislauf 48 umfasst Leitungen 90, 92, in den die Wärme aus dem Wärmeträgermedium 34 des Entzugswärmetauschers 32 und, indirekt über den Wärmetauscher 82, des Speichermediums 20 als Wärmeträgermedium der Regenerationsanordnung 42 eingetragen wird. Die Verbindungsleitungen 66, 68 zwischen Entzugswärmetauscher 32 und Regenerationsanordnung 42 münden zwischen Wärmequelle 70 bzw. Wärmesenke 80 und dem Wärmetauscher 82 in den Kreislauf 48, der mit einem Fördermittel 120, etwa einer Pumpe, antreibbar ist. Die Kopplungsvorrichtung 50 ist zwischen Komponente 70, 80 und Wärmetauscher 82 angeordnet.

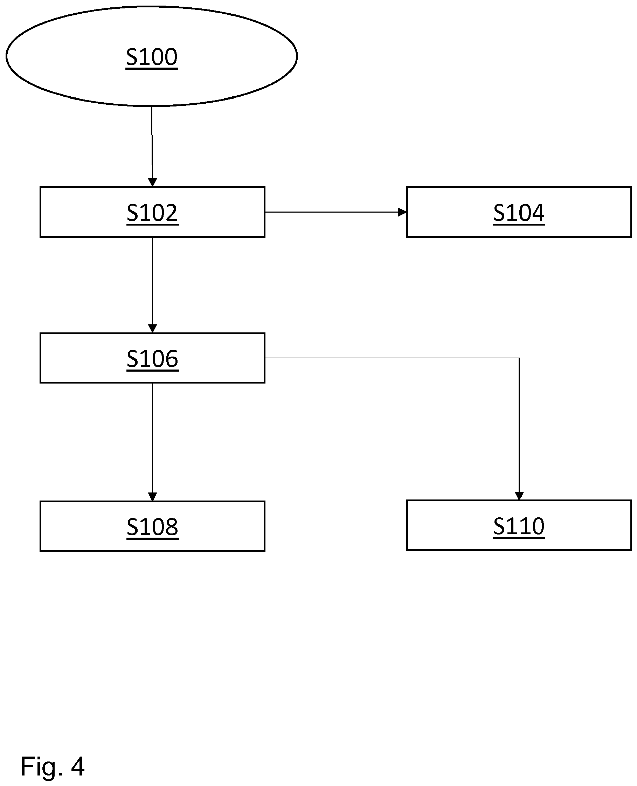

Figur 4 zeigt ein Ablaufschema zur Betriebsweise eines Latentwärmespeichersystems 100 nach Figur 1 und 2 gemäß eines Ausführungsbeispiels der Erfindung, bei dem Entzugswärmetauscher 32 und Regenerationsanordnung 42 zueinander parallel schaltbar vorgesehen sind und die Kopplungsvorrichtung 50 als Mischelement 52 vorgesehen ist.

Das erfindungsgemäße Verfahren zum Betreiben eines Latentwärmespeichersystems 100 sieht vor, dass wenigstens zeitweise das Wärmeträgermedium 34 des Entzugswärmetauschers 32 mit dem Wärmeträgermedium 44 der wenigstens einen Regenerationsanordnung 42 zum gemeinsamen Wärmeentzug aus dem Speichermedium 20 oder zur gemeinsamen Wärmezufuhr in das Speichermedium 20 gekoppelt wird. Entzugswärmetauscher 32 und Regenerationsanordnung 42 werden nur bis zu einem vorgegebenen Vereisungsgrad des Entzugswärmetauschers 32 bezogen auf ein bestimmungsgemäß vereisbares Volumen 36 des Entzugswärmetauschers 32 gekoppelt, vorzugsweise bis zu einem Vereisungsgrad von höchstens 10% bezogen auf ein bestimmungsgemäß vereisbares Volumen 36 des Entzugswärmetauschers 32.

In einem ersten Betriebsmodus zur gemeinsamen Wärmezufuhr in das Speichermedium 20 oder der Bereitstellung von Kühlung werden der eine Entzugswärmetauscher 32 und die Regenerationsanordnung 42 des Regenerationskreislaufs 40 zusammengeschaltet und mit einer Wärmequelle 70 oder Wärmesenke 80 verbunden.

In einem Teillastbetrieb kann eine Kopplungsstärke zwischen Entzugswärmetauscher 32 und Regenerationsanordnung 42 abhängig von einer Solltemperatur der Wärmeträgermedien 34, 44 und/oder Sollleistung von Wärmequelle 70 oder Wärmesenke 80 verändert werden. In einem Volllastbetrieb können der Entzugswärmetauscher 32 und die Regenerationsanordnung 42 maximal durchströmt werden.

Bei einer Anforderung von Regenerationsleistung oder Kühlung in Schritt S100 wird der Vereisungsgrad des Latentwärmespeichers in S102 als Führungsgröße festgestellt. Ist der Vereisungsgrad größer als ein Grenzwert, beispielsweise größer als 10%, wird in S104 die Kopplungsvorrichtung 50 geschlossen und nur die Regenerationsanordnung 42 durch die Regel- und/oder Steuereinrichtung 60 angesteuert. Die hydraulischen Kreisläufe 30, 40 sind dann entsprechend der Darstellung in Figur 1 getrennt.

Ist der Vereisungsgrad höchstens gleich oder weniger als der Grenzwert, beispielsweise kleiner oder gleich 10%, schaltet die Kopplungsvorrichtung in Schritt S106 den Entzugswärmetauscher hinzu. Dieser kann stetig hinzugeschaltet werden, bis eine Solltemperatur und/oder Sollleistung erreicht ist. Bei einem Teillastbetrieb öffnet in S108 die Kopplungsvorrichtung, beispielsweise ein Mischelement, nur soweit in Richtung Entzugswärmetauscher, bis die Solltemperatur und/oder Sollleistung erreicht ist. Bei einer Leistungsanforderung im Volllastbetrieb öffnet die Kopplungsvorrichtung in Schritt S110 soweit, dass Entzugswärmetauscher und Regenerationsanordnung maximal durchströmt sind.

## Patentansprüche

1. Latentwärmespeichersystem (100) umfassend wenigstens einen Latentwärmespeicher (10), der ein Speichermedium (20) mit latenter Wärme enthält, wenigstens einen Entzugskreislauf (30), mit dem im Normalbetrieb bestimmungsgemäß Wärme aus dem Speichermedium (20) entziehbar ist, und wenigstens einen Regenerationskreislauf (40), mit dem im Normalbetrieb bestimmungsgemäß Wärme in das Speichermedium (20) zuführbar ist, wobei der wenigstens eine Latentwärmespeicher (10) umfasst
- wenigstens einen in Kontakt mit dem Speichermedium (20) stehenden Entzugswärmetauscher (32), der mit dem Entzugskreislauf (30) verbindbar ist, und
- wenigstens eine Regenerationsanordnung (42) innerhalb des Speichermediums (20), die mit dem Regenerationskreislauf (40) verbindbar ist,
**dadurch gekennzeichnet,**
**dass** eine Kopplungsvorrichtung (50) vorgesehen ist, mit der wenigstens zeitweise der wenigstens eine Entzugswärmetauscher (32) mit der wenigstens einen Regenerationsanordnung (42) zum gemeinsamen Wärmeentzug aus dem Speichermedium (20) oder zur gemeinsamen Wärmezufuhr in das Speichermedium (20) koppelbar ist.

2. Latentwärmespeichersystem nach Anspruch 1, **dadurch gekennzeichnet, dass** die Kopplungsvorrichtung (50) zum vorübergehenden gemeinsamen Wärmeentzug aus dem Speichermedium (20) die wenigstens eine Regenerationsanordnung (42) und den wenigstens einen Entzugswärmetauscher (32) gemeinsam an eine Wärmequelle (70) anschließt, oder dass die Kopplungsvorrichtung (50) zur vorübergehenden gemeinsamen Wärmezufuhr in das Speichermedium (20) den wenigstens einen Entzugswärmetauscher (32) und die die wenigstens eine Regenerationsanordnung (42) gemeinsam an eine Wärmesenke (80) anschließt.

3. Latentwärmespeichersystem nach Anspruch 1 oder 2, **dadurch gekennzeichnet, dass** der wenigstens eine Regenerationskreislauf (40) als Regenerationsanordnung (42) einen Regenerationswärmetauscher (46) aufweist.

4. Latentwärmespeichersystem nach Anspruch 3, **dadurch gekennzeichnet, dass** die Wärmeträgermedien (34, 44) von Entzugswärmetauscher (30) und Regenerationswärmetauscher (40) zum gemeinsamen Wärmeentzug aus dem Speichermedium (20) oder zur gemeinsamen Wärmezufuhr in das Speichermedium (20) in eine gemeinsame Zuleitung (90) zur Wärmequelle (70) oder zur Wärmesenke (80) leitbar sind.

5. Latentwärmespeichersystem nach einem der Ansprüche 1 bis 2, **dadurch gekennzeichnet, dass** die Regenerationsanordnung (42) des wenigstens einen Regenerationskreislaufs (40) das Speichermedium (20) als Wärmeträgermedium aufweist und zum gemeinsamen Wärmeentzug aus dem Speichermedium (20) oder zur gemeinsamen Wärmezufuhr in das Speichermedium (20) über einen Wärmetauscher (82) im Regenerationskreislauf (40) mit dem Wärmeträgermedium (34) des wenigstens einen Entzugswärmetauschers (32) koppelbar ist.

6. Latentwärmespeichersystem nach einem der vorhergehenden Ansprüche, **dadurch gekennzeichnet, dass** die Kopplungsvorrichtung (50) ein regel- und/oder steuerbares Mischelement (52) umfasst.

7. Latentwärmespeichersystem nach einem der vorhergehenden Ansprüche, **dadurch gekennzeichnet, dass** eine Regel- und/oder Steuervorrichtung (60) vorgesehen ist, welche die Kopplungsvorrichtung (50) abhängig von wenigstens einem Betriebsparameter des Latentwärmespeichers (10) und/oder des Latentwärmespeichersystems (100) betätigt.

8. Verfahren zum Betreiben eines Latentwärmespeichersystems (100) nach einem der vorhergehenden Ansprüche, wobei das Latentwärmespeichersystem (100) wenigstens einen Latentwärmespeicher (10), der ein Speichermedium (20) mit latenter Wärme enthält, wenigstens einen Entzugskreislauf (30), mit dem im Normalbetrieb bestimmungsgemäß Wärme aus dem Speichermedium (20) entzogen wird und wenigstens einen Regenerationskreislauf (40), mit dem im Normalbetrieb bestimmungsgemäß Wärme in das Speichermedium (20) zugeführt wird, umfasst, wobei der wenigstens eine Latentwärmespeicher (10) umfasst
- wenigstens einen in Kontakt mit dem Speichermedium (20) stehenden Entzugswärmetauscher (32), der mit dem Entzugskreislauf (30) verbunden ist, und
- wenigstens eine Regenerationsanordnung (42) innerhalb des Speichermediums (20), die mit dem Regenerationskreislauf (40) verbunden ist,
**dadurch gekennzeichnet,**
**dass** wenigstens zeitweise der wenigstens eine Entzugswärmetauscher (32) mit der wenigstens einen Regenerationsanordnung (42) zum gemeinsamen Wärmeentzug aus dem Speichermedium (20) oder zur gemeinsamen Wärmezufuhr in das Speichermedium (20) gekoppelt wird.

9. Verfahren nach Anspruch 8, **dadurch gekennzeichnet, dass** der wenigstens eine Entzugswärmetauscher (32) und die wenigstens eine Regenerationsanordnung (42) nur bis zu einem vorgegebenen Vereisungsgrad des Entzugswärmetauschers (32) bezogen auf ein bestimmungsgemäß vereisbares Volumen (36) gekoppelt werden, vorzugsweise bis zu einem Vereisungsgrad von höchstens 10% bezogen auf ein bestimmungsgemäß vereisbares Volumen (36) des Latentwärmespeichers (10).

10. Verfahren nach Anspruch 8 oder 9, **dadurch gekennzeichnet, dass** in einem ersten Betriebsmodus zur gemeinsamen Wärmezufuhr in das Speichermedium (20) der wenigstens eine Entzugswärmetauscher (32) und die Regenerationsanordnung (42) des wenigstens einen Regenerationskreislaufs (40) zusammengeschaltet und mit einer Wärmequelle (70) verbunden werden.

11. Verfahren nach einem der Ansprüche 8 bis 10, **dadurch gekennzeichnet, dass** in einem zweiten Betriebsmodus zum gemeinsamen Wärmeentzug aus dem Speichermedium (20) die Regenerationsanordnung (42) des wenigstens einen Regenerationskreislaufs (40) und der wenigstens eine Entzugswärmetauscher (32) zusammengeschaltet und mit einer Wärmesenke (80) verbunden werden.

12. Verfahren nach Anspruch 11, **dadurch gekennzeichnet, dass** der zweite Betriebsmodus eingestellt wird, wenn die Temperatur des Speichermediums (20) kleiner ist als 10°C, bevorzugt kleiner als 7°C ist, besonders bevorzugt höchstens 5°C beträgt.

13. Verfahren nach einem der Ansprüche 8 bis 12, **dadurch gekennzeichnet, dass** in einem Teillastbetrieb eine Kopplungsstärke zwischen Entzugswärmetauscher (32) und Regenerationsanordnung (42) abhängig von einer Solltemperatur der Wärmeträgermedien (34, 44) und/oder Sollleistung von Wärmequelle (70) oder Wärmesenke (80) verändert wird.

14. Verfahren nach einem der Ansprüche 8 bis 13, **dadurch gekennzeichnet, dass** in einem Volllastbetrieb der Entzugswärmetauscher (32) und die Regenerationsanordnung (42) maximal durchströmt werden.

## Claims

1. Latent heat accumulator system (100) comprising at least one latent heat accumulator (10), which contains a storage medium (20) with latent heat, at least one extraction circuit (30), with which in normal operation as intended the quantity of heat can be extracted from the storage medium (20), and at least one regeneration circuit (40), with which in normal operation as intended the quantity of heat can be supplied to the storage medium (20), wherein the at least one latent heat accumulator (10) comprises
- at least one extraction heat exchanger (32) which is in contact with the storage medium (20) and can be connected to the extraction circuit (30), and
- at least one regeneration arrangement (42) within the storage medium (20), which can be connected to the regeneration circuit (40),
**characterised in that** a coupling device (50) is provided, with which the at least one extraction heat exchanger (32) can be at least temporarily coupled to the at least one regeneration arrangement (42) for the common extraction of heat from the storage medium (20) or for the common supply of heat to the storage medium (20).

2. Latent heat accumulator system according to claim 1, **characterised in that**, for the temporary common extraction of heat from the storage medium (20), the coupling device (50) jointly connects the at least one regeneration arrangement (42) and the at least one extraction heat exchanger (32) to a heat source (70), or **in that**, for the temporary common supply of heat to the storage medium (20), the coupling device (50) jointly connects the at least one extraction heat exchanger (32) and the at least one regeneration arrangement (42) to a heat sink (80).

3. Latent heat accumulator system according to claim 1 or 2, **characterised in that** the at least one regeneration circuit (40) comprises a regeneration heat exchanger (46) as regeneration arrangement (42).

4. Latent heat accumulator system according to claim 3, **characterised in that** the heat transfer media (34, 44) of extraction heat exchanger (30) and regeneration heat exchanger (40) can be conducted into a common supply line (90) to the heat source (70) or to the heat sink (80) for the common extraction of heat from the storage medium (20) or for the common supply of heat to the storage medium (20).

5. Latent heat accumulator system according to any one of claims 1 to 2, **characterised in that** the regeneration arrangement (42) of the at least one regeneration circuit (40) has the storage medium (20) as heat transfer medium and can be coupled to the heat transfer medium (34) of the at least one extraction heat exchanger (32) for the common extraction of heat from the storage medium (20) or for the common supply of heat to the storage medium (20) via a heat exchanger (82) in the regeneration circuit (40).

6. Latent heat accumulator system according to any one of the preceding claims, **characterised in that** the coupling device (50) comprises an adjustable and/or controllable mixing element (52).

7. Latent heat accumulator system according to any one of the preceding claims, **characterised in that** an adjustment and/or control device (60) is provided, which actuates the coupling device (50) in dependence on at least one operating parameter of the latent heat accumulator (10) and/or the latent heat accumulator system (100).

8. Method for operating a latent heat accumulator system (100) according to any of the preceding claims, the latent heat accumulator system (100) comprising at least one latent heat accumulator (10) containing a storage medium (20) with latent heat, at least one extraction circuit (30), with which in normal operation as intended the quantity of heat is removed from the storage medium (20), and at least one regeneration circuit (40) with which in normal operation as intended the quantity of heat is supplied to the storage medium (20), wherein the at least one latent heat accumulator (10) comprises
- at least one extraction heat exchanger (32), which is in contact with the storage medium (20) and is connected to the extraction circuit (30), and
- at least one regeneration arrangement (42) within the storage medium (20), which is connected to the regeneration circuit (40),
**characterised in that** the at least one extraction heat exchanger (32) is at least temporarily coupled to the at least one regeneration arrangement (42) for the common extraction of heat from the storage medium (20) or for the common supply of heat to the storage medium (20).

9. Method according to claim 8, **characterised in that** the at least one extraction heat exchanger (32) and the at least one regeneration arrangement (42) are only coupled up to a predetermined degree of icing of the extraction heat exchanger (32) relative to a volume (36) that is capable of icing as intended, preferably up to a degree of icing of at most 10% relative to a volume (36) of the latent heat store (10) that is capable of icing as intended.

10. Method according to claim 8 or 9, **characterised in that** in a first operating mode for the common supply of heat to the storage medium (20) the at least one extraction heat exchanger (32) and the regeneration arrangement (42) of the at least one regeneration circuit (40) are connected together and are connected to a heat source (70).

11. Method according to any one of claims 8 to 10, **characterised in that** in a second operating mode for the common extraction of heat from the storage medium (20) the regeneration arrangement (42) of the at least one regeneration circuit (40) and the at least one extraction heat exchanger (32) are connected together and are connected to a heat sink (80).

12. Method according to claim 11, **characterised in that** the second operating mode is set when the temperature of the storage medium (20) is less than 10°C, preferably less than 7°C, particularly preferably at most 5°C.

13. Method according to any one of claims 8 to 12, **characterized in that** in an operation under partial load a coupling strength between the extraction heat exchanger (32) and the regeneration arrangement (42) is changed depending on a desired temperature of the heat transfer media (34, 44) and/or desired power of heat source (70) or heat sink (80).

14. Method according to one of claims 8 to 13, **characterised in that** in an operation under full load maximum flow occurs through the extraction heat exchanger (32) and the regeneration arrangement (42).

## Revendications

1. Système d'accumulation de chaleur latente (100) comprenant au moins un accumulateur de chaleur latente (10) qui contient un milieu accumulateur (20) avec de la chaleur latente, au moins un circuit d'extraction (30), avec lequel en fonctionnement normal de la chaleur peut être extraite selon les dispositions du milieu accumulateur (20), et au moins un circuit de régénération (40), avec lequel en fonctionnement normal de la chaleur peut être injectée selon les dispositions dans le milieu accumulateur (20), dans lequel l'au moins un accumulateur de chaleur latente (10) comporte
- au moins un échangeur de chaleur d'extraction (32) se trouvant en contact avec le milieu accumulateur (20) qui peut être relié au circuit d'extraction (30), et
- au moins un agencement de régénération (42) dans le milieu accumulateur (20) qui peut être relié au circuit de régénération (40),
**caractérisé en ce qu'**
un dispositif de couplage (50) est prévu, avec lequel au moins temporairement l'au moins un échangeur de chaleur d'extraction (32) peut être couplé avec l'au moins un agencement de régénération (42) pour l'extraction de chaleur commune du milieu accumulateur (20) ou pour l'injection de chaleur commune dans le milieu accumulateur (20).

2. Système d'accumulation de chaleur latente selon la revendication 1, **caractérisé en ce que** le dispositif de couplage (50) connecte pour l'extraction de chaleur commune temporaire du milieu accumulateur (20) l'au moins un agencement de régénération (42) et l'au moins un échangeur de chaleur d'extraction (32) ensemble à une source de chaleur (70), ou **en ce que** le dispositif de couplage (50) connecte pour l'injection de chaleur commune temporaire dans le milieu accumulateur (20) l'au moins un échangeur de chaleur d'extraction (32) et l'au moins un agencement de régénération (42) ensemble à un puits de chaleur (80).

3. Système d'accumulation de chaleur latente selon la revendication 1 ou 2, **caractérisé en ce que** l'au moins un circuit de régénération (40) présente comme agencement de régénération (42) un échangeur de chaleur de régénération (46).

4. Système d'accumulation de chaleur latente selon la revendication 3, **caractérisé en ce que** les milieux caloporteurs (34, 44) peuvent être conduits de l'échangeur de chaleur d'extraction (30) et l'échangeur de chaleur de régénération (40) pour l'extraction de chaleur commune du milieu accumulateur (20) ou pour l'injection de chaleur commune dans le milieu accumulateur (20) dans une conduite d'injection (90) commune à la source de chaleur (70) ou au puits de chaleur (80).

5. Système d'accumulation de chaleur latente selon l'une quelconque des revendications 1 à 2, **caractérisé en ce que** l'agencement de régénération (42) de l'au moins un circuit de régénération (40) présente le milieu accumulateur (20) comme milieu caloporteur et peut être couplé pour l'extraction de chaleur commune du milieu accumulateur (20) ou pour l'injection de chaleur commune dans le milieu accumulateur (20) par le biais d'un échangeur de chaleur (82) dans le circuit de régénération (40) au milieu caloporteur (34) d'au moins un échangeur de chaleur d'extraction (32).

6. Système d'accumulation de chaleur latente selon l'une quelconque des revendications précédentes, **caractérisé en ce que** le dispositif de couplage (50) comporte un élément de mélange (52) régulable et/ou commandable.

7. Système d'accumulation de chaleur latente selon l'une quelconque des revendications précédentes, **caractérisé en ce qu'**un dispositif de régulation et/ou de commande (60) est prévu, lequel actionne le dispositif de couplage (50) en fonction d'au moins un paramètre de fonctionnement de l'accumulateur de chaleur latente (10) et/ou du système d'accumulation de chaleur latente (100).

8. Procédé de fonctionnement d'un système d'accumulation de chaleur latente (100) selon l'une quelconque des revendications précédentes, dans lequel le système d'accumulation de chaleur latente (100) comporte au moins un accumulateur de chaleur latente (10) qui contient un milieu accumulateur (20) avec de la chaleur latente, au moins un circuit d'extraction (30), avec lequel en fonctionnement normal de la chaleur est extraite selon les dispositions du milieu accumulateur (20) et au moins un circuit de régénération (40), avec lequel en fonctionnement normal de la chaleur est injectée selon les dispositions dans le milieu accumulateur (20), dans lequel l'au moins un accumulateur de chaleur latente (10) comporte
- au moins un échangeur de chaleur d'extraction (32) se trouvant en contact avec le milieu accumulateur (20), qui est relié au circuit d'extraction (30), et
- au moins un agencement de régénération (42) dans le milieu accumulateur (20) qui est relié au circuit de régénération (40),
**caractérisé en ce qu'**
au moins temporairement l'au moins un échangeur de chaleur d'extraction (32) est couplé à l'au moins un agencement de régénération (42) pour l'extraction de chaleur commune du milieu accumulateur (20) ou pour l'injection de chaleur commune dans le milieu accumulateur (20).

9. Procédé selon la revendication 8, **caractérisé en ce que** l'au moins un échangeur de chaleur d'extraction (32) et l'au moins un agencement de régénération (42) sont couplés seulement jusqu'à un degré de givrage prédéfini de l'échangeur de chaleur d'extraction (32) par rapport à un volume (36) givrable selon les dispositions, de préférence jusqu'à un degré de givrage d'au plus 10 % par rapport à un volume (36) givrable selon les dispositions de l'accumulateur de chaleur latente (10).

10. Procédé selon la revendication 8 ou 9, **caractérisé en ce que** dans un premier mode de fonctionnement pour l'injection de chaleur commune dans le milieu accumulateur (20) l'au moins un échangeur de chaleur d'extraction (32) et l'agencement de régénération (42) de l'au moins un circuit de régénération (40) sont raccordés ensemble et reliés à une source de chaleur (70).

11. Procédé selon l'une des revendications 8 à 10, **caractérisé en ce que** dans un second mode de fonctionnement pour l'extraction de chaleur commune du milieu accumulateur (20) l'agencement de régénération (42) de l'au moins un circuit de régénération (40) et l'au moins un échangeur de chaleur d'extraction (32) sont raccordés ensemble et sont reliés à un puits de chaleur (80).

12. Procédé selon la revendication 11, **caractérisé en ce que** le second mode de fonctionnement est réglé lorsque la température du milieu accumulateur (20) est inférieure à 10 °C, de préférence inférieure à 7 °C, le plus préférentiellement au plus de 5 °C.

13. Procédé selon l'une des revendications 8 à 12, **caractérisé en ce que** dans un fonctionnement de charge partielle une force de couplage entre l'échangeur de chaleur d'extraction (32) et l'agencement de régénération (42) est modifiée en fonction d'une température de consigne des milieux caloporteurs (34, 44) et/ou puissance de consigne de la source de chaleur (70) ou du puits de chaleur (80).

14. Procédé selon l'une des revendications 8 à 13, **caractérisé en ce que** dans un fonctionnement de charge pleine l'échangeur de chaleur d'extraction (32) et l'agencement de régénération (42) sont traversés au maximum.
